# EUROPEAN PATENT SPECIFICATION

(11) **EP 1 551 708 B1**
(45) Date of publication and mention of the grant of the patent: **05.04.2006**
(21) Application number: 02782884.7
(22) Date of filing: 11.10.2002
(51) Int. Cl.: B64C 29/00, B64C 11/48

(54) **VERTICAL TAKE-OFF AND LANDING AIRCRAFT**
SENKRECHT STARTENDES UND LANDENDES FLUGZEUG
AERONEF A DECOLLAGE ET ATTERRISSAGE VERTICAUX

(43) Date of publication of application: 13.07.2005
(73) Proprietor: Unzicker, Stefan, 87477 Sulzberg (DE)
(72) Inventor: Unzicker, Stefan, 87477 Sulzberg (DE)
(86) International application number: PCT/EP2002/011386
(87) International publication number: WO 2004/033295

(56) References cited:
- WO-A-01/62591
- DE-C- 391 281
- US-A- 1 358 603
- US-A- 2 761 634
- US-A- 4 486 146
- US-A- 5 114 096

## Description

### 1.0 Technical Field:

The invention relates to an aircraft which can act as a Vertical Take-Off and Landing (VTOL) aircraft, and a method for using such an aircraft.

### 2.0 State of the Art:

Aircrafts having vertical or steep take off and landing capabilities are well known to the man skilled in the art:
Helicopters, and gyrocopters which use an additional forward thrust propeller are well known vertical take-off aircrafts. However, helicopters and gyrocopters are very expensive and have a very limited speed (normally maximum about 300 km/h) and limited range compared to non-helicopter aircrafts.

Table 1 discloses the results of a search of the prior art in this technical field that are relate to the present invention. The similarities and differences are identified. The improving qualities of the present invention are also noted. Brief descriptions of the related prior art follow.

DE-A-42 37 873 published on 19.5.1994 discloses a VTOL aircraft which generates an airflow over all wings and control surfaces by means of jet engines and a gas redirection system. This aircraft further uses flaps in order to increase the surface of the wings during start and landing.

DE-A-44 05 975 published on 31.08.1995 discloses a VTOL aircraft having a completely vertical take-off position, with the use of a single propeller acting as a lifting rotor. The cockpit pivots within the fuselage. The aircraft further uses auxiliary engines or propellers in the wings to enable maneuvering and stabilize the aircraft during hover flight.

US-A-4928907 published on 29.05.1990 discloses a compound helicopter capable of conventional winged horizontal airplane flight. The helicopter incorporates a separate propeller for transitional and horizontal flight. A primary object of this patent was to find an alternate means for torque compensation as opposed to the tail rotor conventionally used in helicopters.

US-A-5407150 published on 18.04.1995 discloses a VTOL aircraft having a thrust unit for vertical flight, and low speed forward flight. The airflow from this thrust unit is directed downwards by a duct system, thereby creating lift. An additional thrust unit is required for full forward flight.

US-A-5056737 published on 15.10.1991 discloses a VTOL aircraft having a touch-down area in the tail for vertical landing. Upon landing, the aircraft tumbles due to gravity into a stable horizontal position.

US-A-3966142 published on 29.06.1976 discloses a VTOL aircraft, having a fuselage that is composed of two main sections which are hinged. Both the propulsion unit and the empennage are rotated about the main fuselage.

US-A-5687934 published on 18.11.1997 discloses a vertical takeoff aircraft, having a duct system providing suction as well as blowing of air to provide a lifting force in the hover phase. During the hover phase, the single propeller provides low pitch propeller airflow for yaw control, pitch control and roll control.

US-A-5395073 published on 7.03.1995 discloses VTOL aircraft with an outer free or rotating wing. The inner wing is fixed to the fuselage. The fuselage is able to rotated with respect to the tail boom assembly, thereby attaining a tilted, nose-up configuration. For vertical take-off and landing, the fuselage and thrust source are pivoted to a generally vertical orientation.

US-A-3995794 published on 7.12.1976 discloses a VTOL aircraft comprising a biplane arrangement. The upper wing is rotatable, permitting steeper take-off and landing angles. The propulsion means is also carried by the upper wing, and thus rotates with it.

Further, an aircraft (Bell/Boing: "V22") has been proposed, in which the propeller- and motor units on the wings are tilted during transition from hover flight to cruise flight and vice versa. The tilting of the propeller- and motor units has to be performed in a very co-ordinated manner by the pilot, who normally will have to be assisted by an electronic control system.

Further, an aircraft (British Aerospace: "Sea Harrier") has been proposed, which utilizes jet engines that can be rotated 90 degrees to provide the vertical thrust needed for takeoff and landing. This requires additional jets, and a very skillful pilot. Also, the heat and pressure created by the jet engines in the vertical position make it practical for use only on aircraft carriers having heavy metal decks, since they would damage the concrete runways used in commercial aviation.

DE-A-24 33 951 published on 5.2.1976 discloses and aircraft for vertical take off and landing. The aircraft in this application is similar to a conventional aircraft for horizontal take-off and landing, and has two propellers positioned on each of the main wings in order to create a propeller airflow over the entire lifting surfaces of the wings. This aircraft is brought into a nose-up pitched position before starting and landing, in which position the propeller airflow over the main wing will create a lifting force in an oblique rearward direction. With the pitch angle and the thrust adjusted appropriately, the thrust and lift will combine to create a resultant vertical force. If the resultant force is of greater magnitude than the force of gravity acting on the aircraft, it may lift the aircraft. During hover flight of the aircraft, stability is achieved through controls for pitch control, roll control and yaw control which are positioned completely within the propeller airflow.

WO-A-0162591 published on 30.08.2001 discloses a VTOL aircraft comprising a propeller, a lower front wing and an upper rear wing. The angles of attack of the wings can be individually adjusted with respect to the produced air-stream, to achieve the desired resultant upward force. This angle of attack adjustment also allows for roll control.

US-A- 5098034 published on 24.03.1992 discloses a VTOL aircraft having a fixed canard wing and a rotating primary wing. Two propellers are fitted to the fixed canard wing, creating an influx over the canard wing, and an efflux over the rotating primary wing. The aircraft also consists of standard tail **group.** The aircraft is also capable of conventional horizontal take-off and landing.

DE-A-391281 discloses an aircraft according to the preamble of claim 1.

Despite the fact that the vertical take-off and landing capability of an aircraft is highly desirable, they have almost no share in the aircraft market.

Due to the multitude of disadvantageous design aspects of the above mentioned prior art, they are overly complex, expensive, difficult to maneuver and/or failure prone.

The present invention has a vast number of improving qualities over the prior art, these are described in Table 1 and section 4.0.

### 3.0 Summary of the Invention:

In order to avoid the complexity, costs and inefficiencies of the above mentioned concepts, an aircraft with the features defined in the independent apparatus claim is proposed, and further, a method for starting and landing such an aircraft is proposed.

Further advantageous features are defined in the dependent claims.

A key advantage with an aircraft according to the invention is that it can be designed very much like a conventional single engine non-vertical take-off and landing aircraft. The aircraft according to the invention requires only marginally more costs to produce than a similar conventional aircraft and can be operated like a conventional aircraft while it can also be used for most helicopter missions.

Compared to a conventional single engine aircraft, an aircraft according to the invention has a large wing **6** and flap **19** configuration which is subjected to a propeller generated airflow, **PGA 4,** to create lift. The control surfaces are positioned within the PGA **4** to ensure control of the three degrees of rotational freedom, (roll, yaw and pitch), during vertical flight. An aircraft according to the invention is also geared for a nose-up pitch position and further comprises high drag devices **7,18,19** in the PGA 4 to aid in vertical take-off as opposed to the conventional forward, horizontal take-off.

### 4.0 Improvements on Prior Art

Table 1 identifies the main improvements of the present invention over the state of the art previously discussed. The improvements, denoted by a letter code, are identified and described below. The features identified are then further described in the general description section (6.0) with reference to the figures.

The present invention as disclosed is most similar to patents DE-A-24-33-951 and WO-A-01-62591-A1.

As previously described, patent application DE-A-24-33-951 proposes a VTOL aircraft in which at least 2 engines generate an airflow over the fixed main wing. The key improvements over this patent are the use of a single constant speed propeller (points A and B), and torque compensation by means of a stator (point C). In addition to these, the present invention also differentiates from this previous patent in the use of high drag devices to facilitate vertical flight (point J) and the unique wing-tip configuration (point K).

Relative patent application WO-A-01-62591-A1 is considered to be the closest prior art. The patent application discloses a VTOL aircraft propelled by a single propeller generating an airflow over the wings. The key improvements over this invention are the use of a fixed, non-hinged, main wing (point E), a stator for torque compensation (point C), an over-center process for achieving stable NUTOL position to enable vertical flight (described in section 6.10), high drag devices (point J), and the unique wing-tip configuration (point K). Further, the present invention does not make use of a secondary wing, or canard wing, which can be very detrimental (point F).

### A - Single propeller

A single propeller **3** for propelling the aircraft during vertical, horizontal and transitional flight, as in the present invention, improves the efficiency of the aircraft. Multiple engines are critical to engine failure, they must be extremely oversized so that in the occasion that one engine should fail, the other can complete the work of both. Multiple thrust units require very good coordination and thus enhanced effort by the pilot. Also, through the use of multiple engines, manufacturing and maintenance of the aircraft is expensive.

### B - Inertial Propeller Torque avoidance

During power changes, the propeller rpm changes. Power changes are necessary to achieve vertical flight. The change in rpm causes an inertial moment on the aircraft, which is critical during vertical flight as it will roll the aircraft. To avoid this phenomenon, the present invention makes use of a constant speed propeller **3**. Such a propeller is well known, but its use to avoid an inertial moment during vertical flight is unheard of.

### C - Stator for Aerodynamic Propeller Torque Compensation

The present invention incorporates a single thrust source **3**, therefore a torque compensation means, such as a stator **29,** needs to be incorporated into the aircraft in order to counter the rolling moment created by the thrust source on the aircraft. The propeller torque is more critical in VTOL aircraft than in conventional aircraft since there is no ambient airflow and the power required for vertical flight is generally much higher than for conventional aircraft.

The stator is an optimal torque compensation means because it is positioned in close proximity to the propeller. At a minimal distance, the stator is more effective since there is more angular component of the downstream airflow near the propeller, this means that the stator blades can have relatively small surface area. The close proximity also ensures that the torque is not carried along the aircraft, which will result in a lighter structure. The stator consists of at least 3 blades, which can be positioned so as not to interfere with the airflow over the main wing, as would a canard wing. Preferably, the stator comprises multiple blades in the order of 12, which would then be positioned all around the perimeter of the fuselage thus creating a uniform effect on the airflow. Further, the stator is advantageous because it reduces the angular component of the airflow, creating a more effective axial airflow over the main wing.

### D - Fixed Thrust Source

In the present invention, the propeller **3** is fixed to the fuselage **2.** Any system which involves rotating the engines and/or the propulsion units are prone to high gyroscopic and inertial effects, and thus require much more complicated maneuvering and stabilizing systems, which often involve assistance by electronic control. This assistance is undesired as it requires extensive tests and certification procedures. Also, such systems require heavier mechanisms to support the rotation or pivoting of the components, thus leading to greater inefficiencies.

### E - Full load on Main Wing

The full load is taken on the main wing **6** in the present invention. Multiple wings cause problems due to an adverse lift created by the forward (or canard) wing on the rear wing. Multiple wings also lead to more complex control systems.

### F - Fixed wing

In the present invention, the main wing **6** is fixed to the fuselage **2.** Systems involving the pivoting or rotation of the wings or fuselage are very complex and require good coordination and enhanced effort by the pilot. The mechanisms required for pivoting large components of the aircraft are heavy and thus inefficient. Greater disturbances are experienced during transitional flight between vertical flight and horizontal flight with the use of hinged or rotating wings.

### G - Attitude Control by aerodynamic surfaces

Attitude control during hover flight is achieved in the present invention by use of aerodynamic surfaces **8,15,16** which are affected by the PGA **4.** The invention, therefore, does not require auxiliary engines or propellers, which would only increase the weight, cost, and complexity and reduce the ease of control.

### H - No redirected exhaust or airflow through ducts or canals

The redirection of exhaust or airflow, present in many prior art, increases the complexity of the aircraft. Thus, the weight and the cost of manufacturing, maintenance and use all increase. Also, the control of such ducts requires very good coordination and enhanced effort by the pilot. The present invention uses a PGA 4, created over the main wing to generate lift, thus no such canals are necessary.

### I - Stable nose-up take-off and landing (NUTOL) position

The vertical take off and landing of an aircraft according to the present invention is done by use of a stable NUTOL (nose-up take-off and landing) position in which the entire aircraft is tilted at a pitch angle *θ*; stable due to the positioning of the center of gravity **23.** The NUTOL position is required to help create vertical flight, but is not excessive and thus not uncomfortable for crew or passengers.

### J - High Drag Devices

The use of high drag devices **7, 18, 19** improves the vertical take off capability as it acts against the forward thrust force. With high drag devices, the aircraft can take off with less NUTOL pitch angle *θ* than a similar VTOL aircraft without such devices.

### K - Wing-tip configuration

The present invention discloses a wing-tip arrangement **17, 27, 28** such that there is an aerodynamic surface that is not exposed to the affects from the generated airflow. This enables damping and stability during steady horizontal flight. A multitude of advantages also result due to the combination of winglet **28,** tip tank **17** and endplate **27,** including increasing the efficiency of the PGA, enhancing the moment of inertia in the roll axis, minimizing the unwanted fuel surge in the y-direction, optimizing a stabilizing fuel surge in the x-direction, alleviating the wing bending moment, decreasing internal loads, complying with aviation certification rules regarding the placement of the fuel tanks, reinstating coordinated flight, and acting as a housing for the main undercarriage **11.**

**Table 1: Related Patents, 'X' indicates that the present invention has made an improvement on the specified patent in the area 195 corresponding to the letter code.**

| | | | | | | | | | | | |
|---|---|---|---|---|---|---|---|---|---|---|---|
| Patent | A B C | | | D | E | F | G | H | I | J | K |
| **DE 24 33 951 A** | X | X | X | | | | | | | X | X |
| DE 42 37 873 A1 | X | X | X | | | | | X | X | | X |
| DE 44 05 975 A | | X | X | X | X | X | X | | X | X | X |
| US1890059 A | | X | X | | | | X | | X | | X |
| US 2974899 A | | X | X | | | | X | X | X | | X |
| US 3966142 A | | X | X | X | | X | | | X | | X |
| US 3995794 A | | X | X | X | X | X | X | | X | | X |
| US 4928907 A | X | X | X | X | X | X | | | X | X | X |
| US 5056737 A | | X | X | | | | | | X | | X |
| US 5098034 A | X | X | X | | X | X | | | X | X | X |
| US 5395073 A | | X | X | X | X | X | | | X | X | X |
| US 5407150 A | X | X | X | | | | X | X | X | X | X |
| **WO 01/62591 A1** CH 0100109 | | X | X | | X | X | | | X | X | X |
| Bell/Boeing"V22" | X | X | X | X | | | | | X | X | X |
| British Aerospace | | X | X | | | | X | X | X | X | X |

### LETTER CODE of improving features of the present invention over existing patents:

■ A Single propeller
■ B Inertial torque avoidance
■ C Stator for torque compensation
■ D Fixed thrust source
■ E Full load on main wing
■ F Fixed wing
■ G Attitude control by aerodynamic surfaces
■ H No redirected exhaust or airflow through ducts or canals
■ I Stable nose-up take-off and landing (NUTOL) position
■ J High drag devices
■ K Wing-tip configuration

### 5.0 Brief description of the drawings:

- **Figure 1**: shows an aircraft according to the invention with the key features identified, in a side view
- **Figure 2**: shows an aircraft according to the invention in a top view
- **Figure 3**: shows an aircraft according to the invention in a front view.
- **Figure 4**: shows the creation of the PGA (Propeller Generated Airflow) over the main wing
- **Figure 5**: shows a cross section of the main wing of the aircraft according to the invention
- **Figure 6**: shows a vector diagram explaining the summation of the forces acting on the aircraft without drag **(a)** and with drag **(b)**
- **Figure 7**: shows the hoisted tail, and the carry through area for the flaps
- **Figure 8**: shows an aircraft in a stable CHTOL (conventional horizontal take-off and landing) position
- **Figure 9**: shows an aircraft in two stable NUTOL (nose-up take-off and landing) positions
- **Figure 10**: shows a diagram explaining the need of a counter torque.
- **Figure 11**: demonstrates the effect of the stator in developing counter torque by illustrating a cross-section view **(a)** and a front view of the stator **(b)**
- **Figure 12**: shows the ventilate spoiler
- **Figure 13**: shows a ducted propeller with an outlet nozzle shaped to deflect the PGA
- **Figure 14**: shows the ineffective PGA regions
- **Figure 15**: shows an aircraft according to the present invention, with the propeller mounted in an alternative way.
- **Figure 16**: demonstrates the different lift created due to the left and right wings having different angles of incidence
- **Figure 17**: shows an aircraft according to the invention, in a ultra-light configuration with alternative landing gear.
- **Figure 18**: shows the nose of the aircraft, depicting the non-ducted propeller and stator, and the propeller and stator blade cross-sections at the respective radial position.
- **Figure 19**: shows the nose of the aircraft, depicting the ducted propeller and stator and the propeller and stator blade cross-sections at the respective radial position.

### 6.0 General Description:

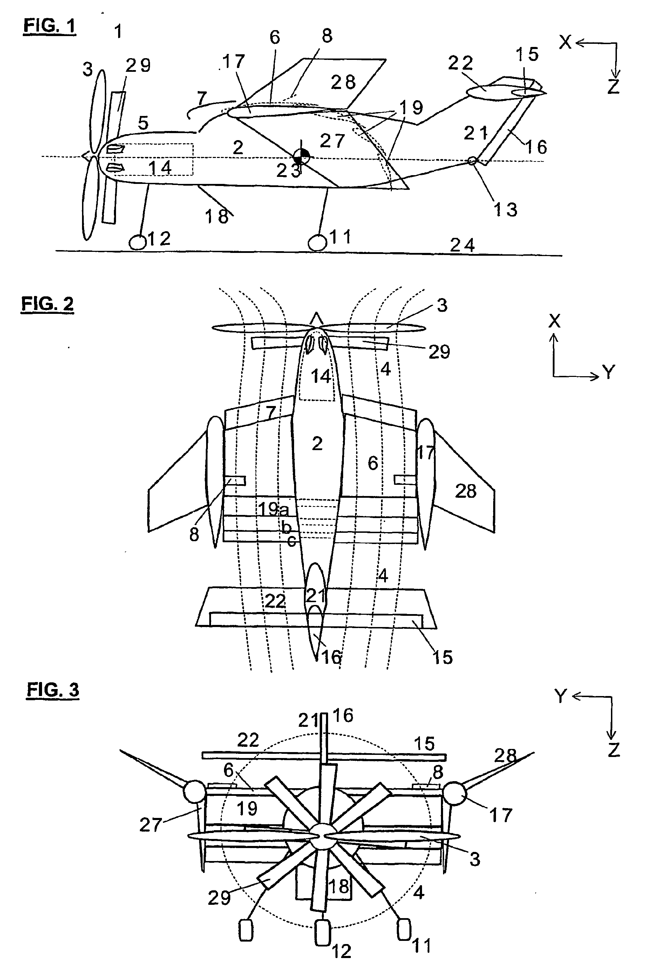

**Figures 1, 2** and **3,** show the side, top and front views, respectively, of a preferred embodiment of an aircraft **1** according to the invention. The key features are identified on these figures.

An aircraft according to the invention is similar to a single engine conventional aircraft, comprising a fuselage **2,** a main wing **6** fixed to the fuselage **2,** and a single constant speed propeller **3.** The aircraft **1** is capable of vertical take-off and landing, as well as high speed horizontal flight.

### 6.1 Propeller Generated Airflow (PGA) and Resulting Lift

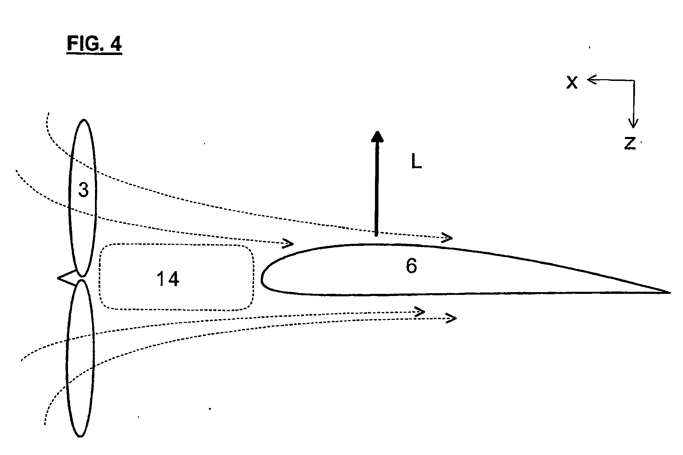

Flight (including take off and landing) of an aircraft **1** according to the invention is achieved by a PGA (propeller generated airflow) **4** over the main wing **6** created by a propeller positioned in front of the main wing **6. Figure 4** demonstrates how the PGA **4** over the main wing **6** generates lift.

### Propeller

According to the invention, the propeller consists of a constant speed propeller.

in a preferred embodiment, the propeller **3** of an aircraft **1** according to the invention is mounted in the nose of the fuselage **2.**

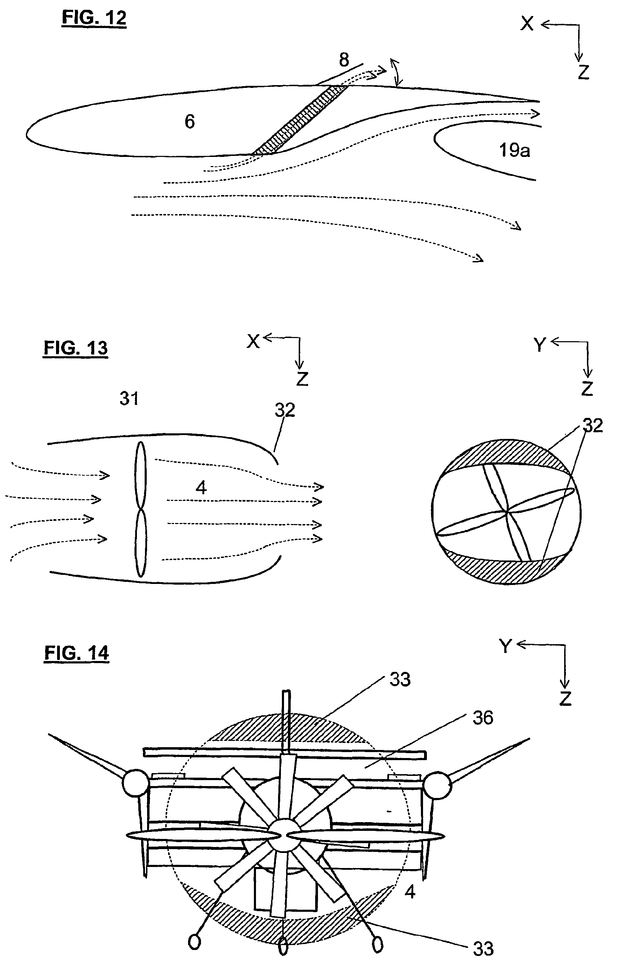

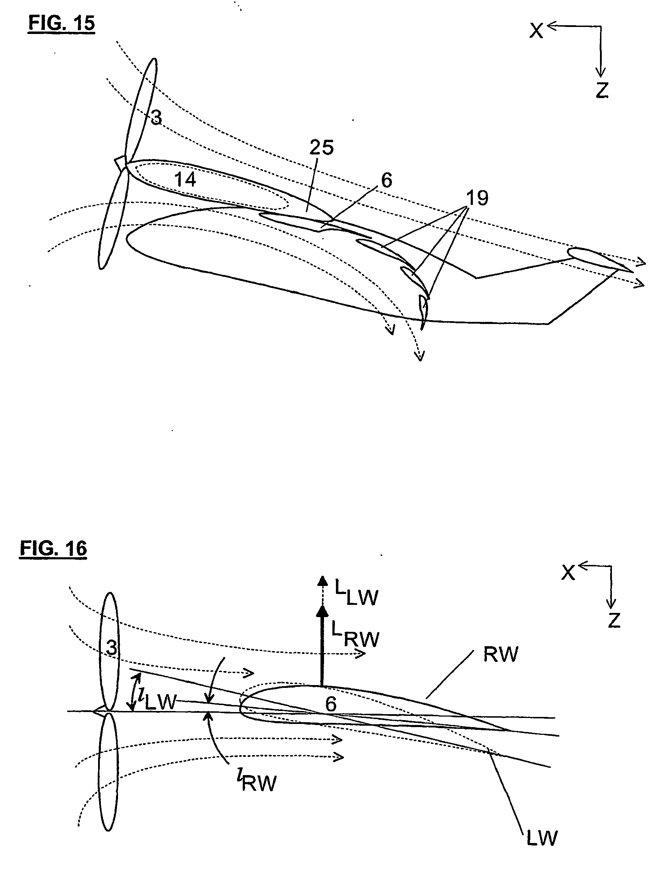

Further, the propeller **3** could comprise a duct **31,** shown in **figure 13,** shaped to deflect the otherwise useless direction of airflow **33** in an effective direction of airflow **36,** the effective direction **36** being in the path of the aerodynamic surfaces, illustrated in figure **14.** A ducted propeller would, however, be heavier and cause more drag at high speeds.

Another, rather important, redirection of the propeller airflow is described in section 6.5 Torque Compensation, Stator.

Alternatively, the duct **31** could rotate with the propeller blades, thereby having the blades acting as spokes and the duct a rotating rim. This arrangement reduces the losses at the blade tips of a propeller **3,** and provides a larger, more effective thrust. Again, however, the rotating rim would be heavier, and it could also impose problems concerning centrifugal forces acting on the rim.

In an alternative embodiment, the propeller could be mounted above the fuselage **2,** but still forward of the main wing. **Figure 15** shows an aircraft according to the invention, with the propeller **3** being mounted to a protrusion **25** extending forward from the central upper part of the fuselage **2.**

### Wing Unit

Vertical flight requires enhanced lift. To enhance the lift, the main wing **6** is equipped with leading edge and trailing edge high lift devices, also subjected to the PGA **4**.

### Trailing Edge

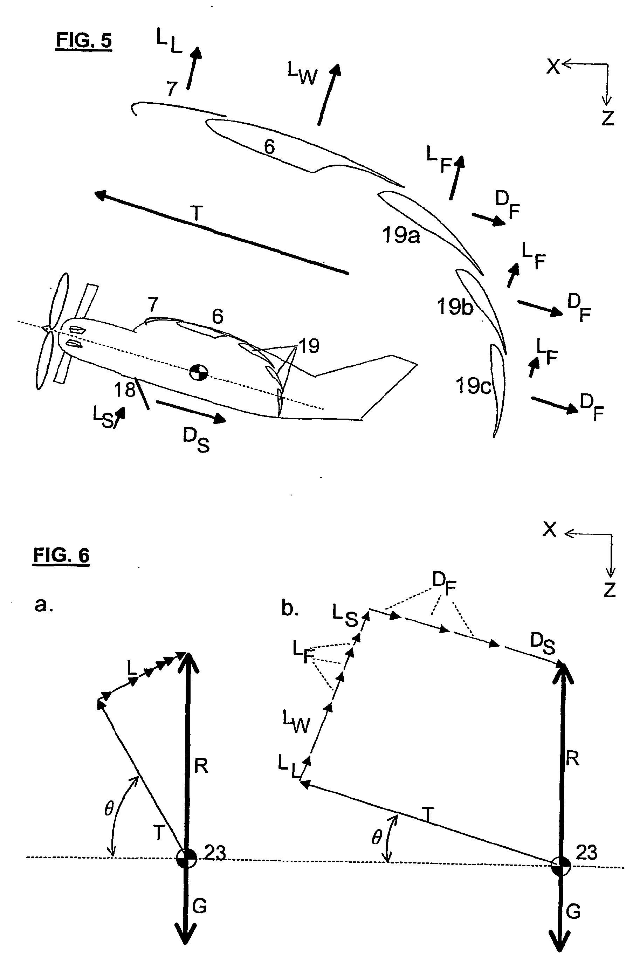

In a preferred embodiment, the main wing 6 has multi-Fowler type of flaps **19a, 19b, 19c** arranged in the PGA **4,** shown in **figure 5.**

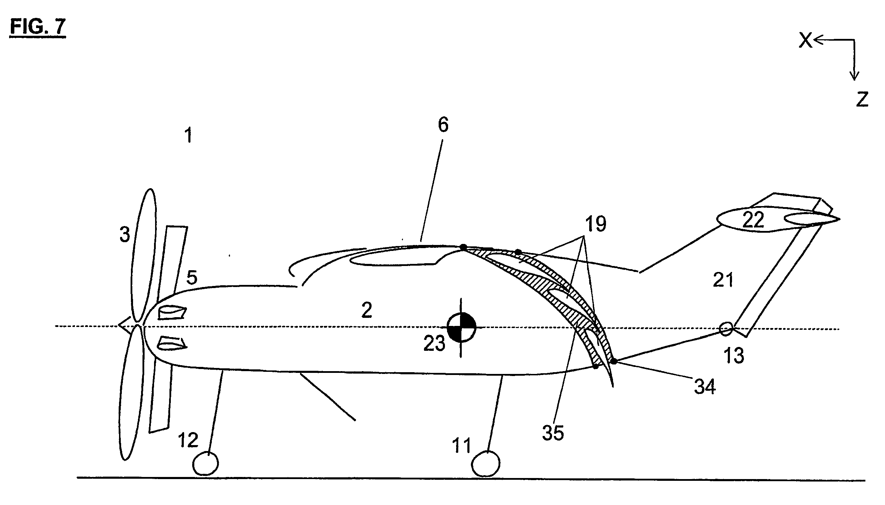

**Figure 7** shows the fuselage **2** in a preferred arrangement so that it extends only to the aft of the main wing **6,** at which point the tail is attached by hoists. With this arrangement, the Fowler flaps **19** can be made with a carry through box for the main spars of each flap. The flaps are therefore full wingspan flaps, thereby enhancing the structural integrity and ease of controls.

In an alternate embodiment, the main wing **6** could be equipped with Handley page type of flaps.

### Leading Edge

In a preferred embodiment, the main wing **6** is equipped with leading edge devices such as slats **7** to enhance the lift and to compensate the wing torsion moment about the y-axis.

In an alternate embodiment, the main wing **6** could be equipped with nose flaps, or Krueger flaps at the leading edge.

### 6.2 Reducing Forward motion

### Conventional Horizontal Take-off and Landing Position (CHTOL)

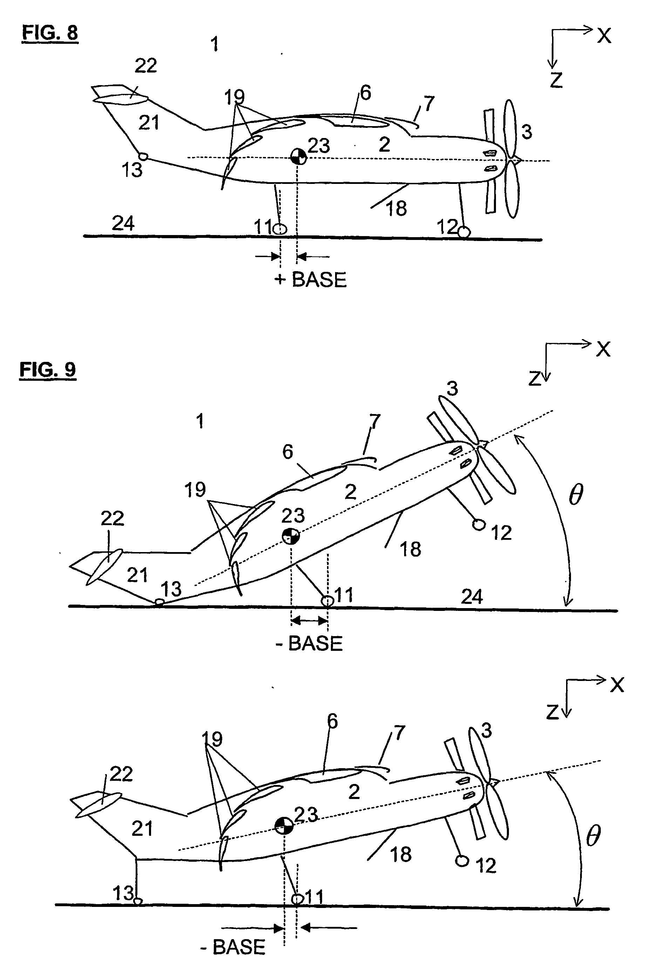

**Figure 8** shows an aircraft **1** according to the invention, standing in a stable CHTOL (conventional horizontal take-off and landing) position on main gear **11** and on a nose gear wheel **12.** In this position, when the PGA **4** is applied an aircraft according to the invention will take-off in a conventional horizontal manner (i.e. with forward motion). An aircraft **1** according to the invention is also capable of a conventional horizontal landing.

In order to achieve solely vertical flight, the forward motion due to the thrust, T, from the propeller must be reduced to zero.

### 6.2.1 Nose-up Take-off and Landing (NUTOL) Position

To reduce the forward motion, an aircraft **1** according to the invention can tilt into a stable NUTOL (nose-up take-off and landing) position. In **figure 9** two NUTOL pitch angles *θ* are illustrated. At a certain NUTOL pitch angle *θ*, the horizontal component of the applied thrust **T** is completely balanced by the horizontal component of the lift **L,** illustrated in figure **6a,** thus enabling solely vertical flight.

The NUTOL position is used for the vertical take-off and landing of an aircraft **1** according to the invention. **Figure 9** shows an aircraft **1** according to the invention standing in a stable. NUTOL position on the main gear wheel **11** and on a tail support **13,** the tail support 13 being aft of the main gear wheel **11.**

A key feature of the invention is that the whole aircraft **1** is tilted, and not just a single component such as the wings or engine.

### 6.2.2 High Lift and Drag Devices

To further decrease the forward motion without requiring large angles of NUTOL pitch angle *θ*, an aircraft **1** according to the invention comprises high drag devices.

In a preferred embodiment, the trailing edge flaps **19** arranged in the PGA **4** are deflected downward and extended backwards to an extreme during vertical flight such that they generate high drag.

In a preferred embodiment, the leading edge devices **7** for high lift extend forward, but not as far downward as conventionally used. The downward extension is used on conventional aircraft to reduce drag during take-off, but the aircraft **1** according to the invention does not require drag minimization during take-off.

In a preferred embodiment, an aircraft **1** according to the invention is further equipped with a retractable fuselage spoiler **18** which generates high drag as well as contributing to the lift.

### 6.3 Vector Diagram Explanation of Vertical Flight:

To achieve vertical flight, the summation of the forces produced on the aircraft **1** must result in a resultant force **R** which is vertical (no horizontal component) acting on the center of gravity **23** of the aircraft **1.**

**Figure 5** shows an aircraft **1** according to the invention during vertical flight, in a NUTOL position. The propeller airflow **4** over the main wing 6, Fowler flaps **19,** leading edge slat **7,** and fuselage spoiler **18** create lifting forces L_{W}, L_{F}, L_{L} and L_{S} on each component respectively in an oblique rearward direction. The components in the airflow also cause drag, the significant drag being caused by the Fowler flaps **19,** D_{F} and the fuselage spoiler **18,** D_{S}.

**Figure 6b** represents the summation of the forces acting on the aircraft **1** in vertical flight. The forward horizontal component of the Thrust **T** is balanced by the backward horizontal components of the lift **L** and drag **D** forces. This results in no horizontal forces on the aircraft **1,** therefore no horizontal movement. The vertical component of the thrust **T** and the lift forces **L** combine to created an upward force on the aircraft **1** that is only slightly diminished by the vertical component of the drag forces **D.** Altogether, the forces acting on the aircraft **1** will produce the required vertical resultant force **R.** If the resultant force **R** acting on the center of gravity **23** is greater than the force of gravity **G,** the aircraft **1** will lift vertically. If the resultant force **R** is less than the force of gravity **G,** the aircraft **1** will descend vertically.

It is clear from **figure 6b** that the NUTOL position of the aircraft **1,** demonstrated by the angle *θ* from the horizontal plane, enables vertical flight by producing a lift component that counters the forward thrust applied. It is also clear from **figures 6a** and **6b** that the increased drag is of advantage for the vertical take-off of the aircraft **1,** since this allows the NUTOL pitch angle *θ* to be reduced. **Figure 6a** represents the vector summation of an aircraft without the high drag. The angle *θ* from the horizontal plane needed in order to obtain no resultant horizontal forces without the high drag is very large therefore it would be uncomfortable for passengers and pilots, and potentially less stable.

### 6.4 Vertical Climb and Descent

As described by the vector diagram, vertical climb of an aircraft **1** according to the invention is achieved by generating a resultant vertical force R that is greater than the force of gravity **G.** In order to increase this resultant force **R,** and thus climb vertically, the thrust **T** of the propeller **3** must be increased. The thrust **T** is used to create the lift **L** and drag **D** forces, therefore these forces are also increased when the thrust is increased. The magnitude of the vertical resultant force **R** is therefore increased without a significant divergence from the vertical path (i.e. the horizontal forces still balance so there will be minimal movement horizontally). Similarly, vertical descent of an aircraft **1** according to the invention occurs when the resultant vertical force **R** is less than the force of gravity **G** and is accomplish by decreasing the thrust **T.**

### 6.5 Torque compensation

Inertial propeller torque is caused by acceleration of the rpm necessary for power change. Preferably, the propeller **3** is a constant speed propeller which is state of the art in many propeller aircraft, and eliminates the resultant inertia and acceleration related torque on the aircraft **1** that would otherwise be caused by changes in power by changing the propeller rpm.

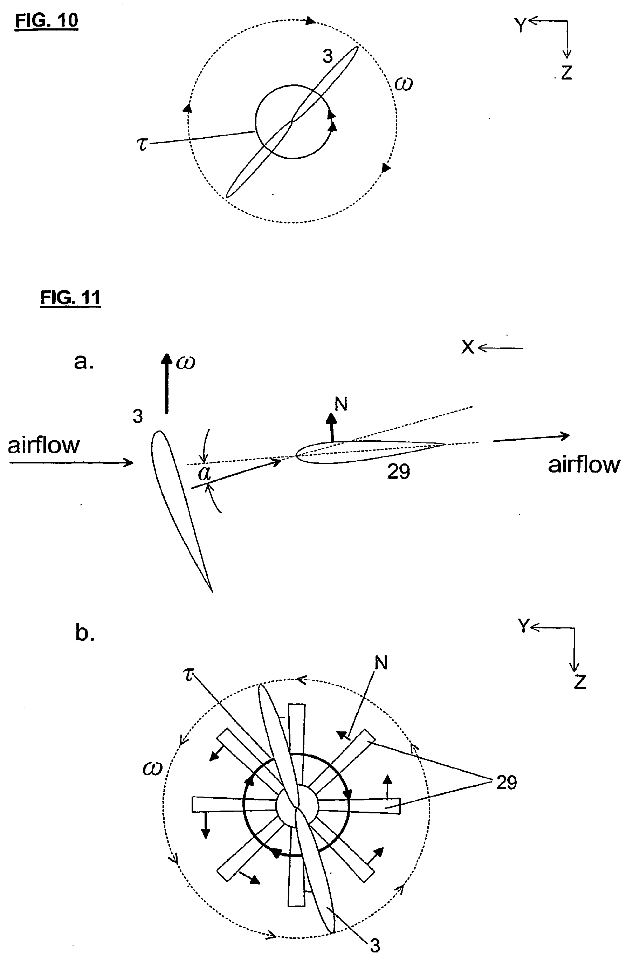

There is also an aerodynamic propeller torque: the aircraft **1** experiences a tendency to roll in a direction opposite to the rotating direction of the single propeller **3** due to propeller drag and the driving engine torque *τ*. **Figure 10** illustrates this rotation of the propeller **3** and the corresponding engine torque *τ*. It is proposed in the present invention to generate a counter-torque aerodynamically in order to compensate this aerodynamic propeller torque.

Aerodynamic Torque Compensation is a means of roll control that governs the specific roll caused by the resultant engine torque *τ*. The features used for roll control can also be used to supplement the aerodynamic torque compensation means.

The resultant engine torque *τ* is proportional to the thrust **T** produced by the propeller **3,** it is therefore essential to develop an aerodynamic torque compensation that is also related to the thrust **T** produced, thereby eliminated problems of over-compensation or under-compensation.

### Stator

In a preferred embodiment an aircraft **1** according to the invention comprises a stator **29** for aerodynamic torque compensation. The PGA **4** acts on each stator blade, creating small induced forces, shown in **figure 11.** The small induced forces from each stator blade combine to create a counter torque in opposite direction to the torque of the engine *τ*, shown in the front view of figure **11.**

The stator **29** is positioned a small distance behind the propeller but far enough so as to keep siren effect to a minimum, this distance is typically one propeller blade chord length.

The stator **29** is a very beneficial means of aerodynamic torque compensation as the counter torque it creates is dependent on the airflow generated by the propeller **3.** At higher power, the torque created by the propeller is greater, but the PGA and the angular component of the PGA are both increased. The increased speed and angular component of the PGA will increase the effectiveness of the stator as an aerodynamic torque compensation means since the induced forces created on each blade will be increased. The stator effectiveness will therefore also decrease appropriately with a decrease in power (and thus decrease in engine torque *τ* ). If the engine torque ceased suddenly due to engine failure, the only airflow over the stator blades is the axial ambient airflow, thus the stator blades would have little or no effect.

The stator consists of at least 3 blades, preferably in the order of 12 blades as multiple blades create a more uniform airflow thereby increasing the effectiveness of the PGA **4**. The multitude of blades and close position of the stator **29** to the propeller **3** ensures that the stator **29** will not create an adverse lift effect on the main wing **6.** The length of the blades would be between 0.4 and 1.5 times the length of the propeller blades.

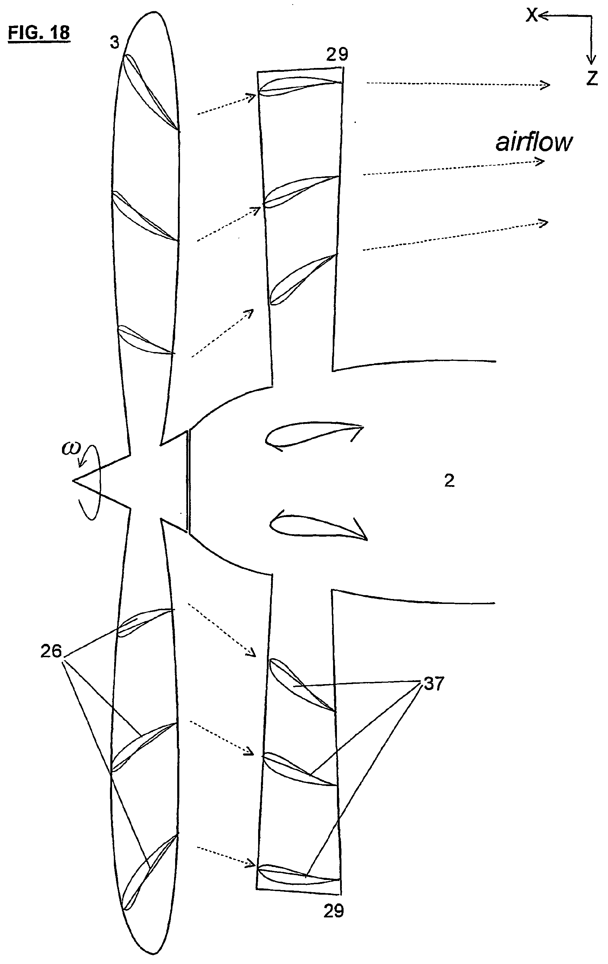

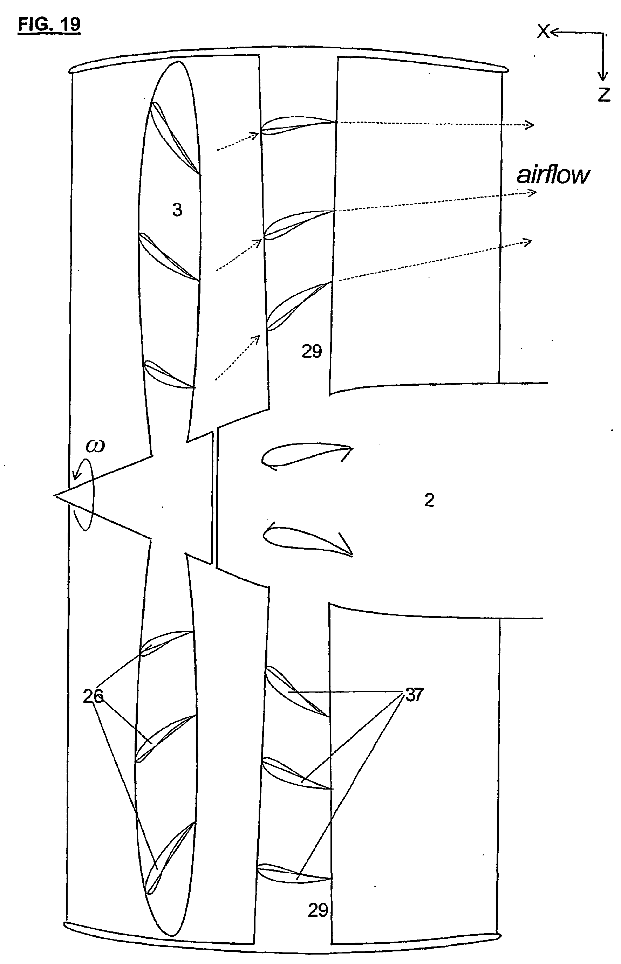

**Figures 18** and **19** illustrate a possible arrangement of the non-ducted propeller and stator, and of the ducted propeller and stator, respectively, depicting a preferable relative diameter and position of the stator. The twist, of both the propeller and stator blades, is a function of radial position, and is illustrated by the cross-sectional views **26, 37** in **figures 18** and **19.** The twist of the stator blade is such so as create the required counter torque generated through profile lift (induced forces). The twist is designed such that a fairly constant angle of attack between 6 and 8 degrees is maintained at all radial positions. Large angles of attack and corresponding stall is to be avoided in all conditions. The airflow dictating the angle of attack of the stator blades is a function of the design and operating conditions of the propeller working in front of the stator.

The stator blades may further comprise trailing edge trim flaps, respectively, in order to account for variations in the angular component of the PGA **4.** These trim flaps could further be throttle actuated.

### Angle of Incidence

In an alternate embodiment, an aircraft **1** according to the invention has different fixed angles of incidence, 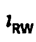 and 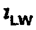 of the left and right main wing **6,** respectively, shown in **figure 16.** The different angles of incidence 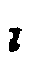 result in different lift capabilities. The wing with the larger angle of incidence 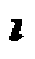 will produce more lift and thus create a roll moment about the x-axis, countering the induced roll due to the engine torque *τ*.

The required difference in angle of incidence of the main wing **6** is dependent on the speed of the airflow over the wings. During steady horizontal flight, the airflow is faster than during hover flight due to a combination of ambient airflow and PGA **4,** thus a smaller difference in the incidence angle 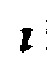 is required. In the alternate embodiment, an aircraft **1** according to the invention has different angles of incidence configured for steady flight in addition to a leading edge device **7** that is further extended on one side of the wings during hover flight to account for the change in airflow by inducing a greater lift on this side. However, the difference in the incidence angle *l* is present whether the engine is powered or not, thus there could be some undesired roll effects if the power fails during flight.

### Size and Profile of Wings

In an alternate embodiment, the counter-torque may be generated by different size of the main wing **6,** and/or by different profile effectiveness of the main wing **6** on the left and the right side of the aircraft **1.** If the wings **6** have different size or effectiveness in order to compensate for the torque, unwanted roll maneuver will be caused during pitch maneuver. Again, there could be some undesired roll effects if the power fails during flight:

### Weighted Wing

In a further embodiment, the counter-torque may be generated by a static weight on right wing for a clockwise rotating engine, or the left wing for a counterclockwise rotating engine. The static weight would create a counter torque that is not variable, and thus would cause undesired roll moments at different power settings, or no power.

### Trim Flap

For the preceding further embodiments, the torque compensating means create some amount of undesired roll at different power settings. Therefore, in an further embodiment, a trim flap, is installed on the winglet **28** which could further be mechanically throttle actuated.

### 6.6 Attitude Control

Aerodynamic torque compensation acts on the roll axis (one of the 3 attitude axes) of the aircraft, thus it is a form of roll control. The features used for roll control can also be used to supplement the aerodynamic torque compensation means.

The aircraft **1** requires a well tuned, but simple control surface for controlling the three degrees of rotational freedom: roll, pitch and yaw, as does any other helicopter or aircraft. If excessive power were applied to a conventional aircraft with its flaps fully extended, it may achieve a small vertical lift off, but it would be unstable in roll, pitch and yaw. The roll control surfaces in conventional aircraft would be useless without significant forward airspeed since they are hardly exposed to any airflow. The rudder and elevators for yaw and pitch control of conventional aircraft are often exposed to some propeller flow, but they are not sized or positioned to handle vertical flight. For this reason, an aircraft **1** according to the invention has similar control surfaces as conventional aircraft, but they positioned primarily within the PGA **4**, and are sized for vertical flight.

### Roll Control

According to a preferred embodiment, the aircraft **1** consists of ventilated spoilers **8** on the main wing **6.** The spoilers are positioned on the edge of the PGA **4**, where they are effective roll control devices in both vertical and horizontal flight. **Figures 2** and **3** illustrate the positioning of the spoilers where the pressure gradient above and below the main wing **6** is very high. Ventilated spoilers, illustrated in **figure 12,** are thus very effective in this area, as the ventilation affects the pressure gradient and thereby the lift created by the wing.

Alternatively, the ventilated spoilers could be positioned completely within the PGA **4.**

In an alternative embodiment, the main wing **6** could consist of ailerons or non-ventilated spoilers positioned within the PGA **4** for roll control. Ailerons are non-preferred as they could interfere with the Fowler flaps.

In an alternative embodiment, the leading edge devices **7,** positioned in the PGA **4,** could be used for roll control.

### Pitch Control

In a preferred embodiment pitch control of the aircraft **1** according to the invention is achieved through conventional elevator **15** control surfaces being mounted within the PGA **4.**

### Yaw Control

Directional control of the aircraft is achieved through rudder control surfaces **16** at the tail being mounted in the PGA **4.** Alternatively, nose mounted controls, i. e. forward of the center of gravity **23,** in the PGA **4** can be used. However, special care must be taken that these surfaces are free to weather vane, otherwise an unfavorable destabilizing effect at forward airspeeds is generated.

### 6.7 Ground Effect Compensation:

As the aircraft **1** lifts off, and the gap between the main wing flaps and the ground widens causing a slight pressure loss. This pressure loss behind the center of gravity **23** creates a moment about the y-axis, causing the aircraft **1** to pitch nose-up. Pitch moments change rapidly leaving and entering a ground effect. Therefore, in a preferred embodiment, the fuselage spoiler **18** is mounted underneath the fuselage **2** forward of the center of gravity **23** of an aircraft **1** according to the invention. A fuselage spoiler **18** of this type experiences a similar pressure loss during the initial climb phase, but forward of the center of gravity **23.** As both elements cause a corresponding pitch ground effect but with opposite levers with respect to center of gravity **23,** a climb-out, stable in pitch can be achieved by using the fuselage spoiler **18.** Further, the fuselage spoiler **18** serves to enhance the drag and the lift during take-off and landing, illustrated in **figures 5** and **6b.**

### 6.8 Transitional Flight:

The method of transition from vertical to horizontal flight, and back, of an aircraft **1** according to the invention is done through the retraction of the high drag devices, such as the Fowler Flaps **19**, the leading edge devices **7,** and the fuselage spoiler **18.** Because the aircraft **1** according to the invention is propelled in all modes of flight by a single universal propeller **3,** and because the aircraft **1** is always flying on aerodynamic lift, there is no distinct aerodynamic change during the transitional flight. Major aerodynamic and flight dynamic changes during transitional flight due to transitions from rotor lifted to attached aerodynamic flow and stall phases involved in these processes have often lead to the failure of VTOL aircraft.

### 6.9 High Speed Horizontal Flight

The power required for vertical take-off implies that the engine of an aircraft **1** according to the invention will be very powerful, and thus enable high horizontal air speeds. The respective power requirement is similar to existing single engine high performance turbo-prop aircraft. In addition, a conventionally wide wing is not necessary and thus the wingspan can be relatively small, which is beneficial for high speed horizontal flight.

### 6.10 Over-Center position and Center of Gravity

The two stable positions of an aircraft **1** according to the invention illustrated in figures 8 and **9** are a result of the position of the center of gravity **23** of the aircraft **1.** The center of gravity **23** is along a center x-axis of the aircraft **1,** in a positive base position (x-direction distance from main landing gear) between the nose gear wheel **12** and the main gear wheel **11,** like in a conventional aircraft. It is so close to the main gear wheel **11,** that a nose-up pitch of the aircraft **1** results in a stable parking position on the main gear wheel **11** and the tail support **13** as the base position becomes negative.

In a preferred embodiment, the NUTOL position may be achieved by applying a reverse thrust in the horizontal position with the breaks applied to the main landing gear. The center of gravity **23** rotates with the aircraft about the main landing gear **11** until the base position shifts from positive to negative. This process is referred to as over-center.

In a preferred embodiment, the tail support **13** comprises a bumper in order to attenuate shocks when landing the aircraft **1** in a NUTOL position.

In a preferred embodiment, the tail support **13** is of adjustable length in order to take account of the operational variation of the center of gravity **23** of the aircraft **1,** or of a non-horizontal ground **24,** illustrated by the two different NUTOL positions in **figure 9.**

A tricycle gear is standard technology, but not the NUTOL position of the present application shown in **figure 9.** Actually, it would be an indication of extreme danger to an airplane pilot if a conventionally designed aircraft inadvertently tilted to the NUTOL position before take-off, since it indicates a too far aft loading of the conventional aircraft with resulting instability and uncontrollability in the air.

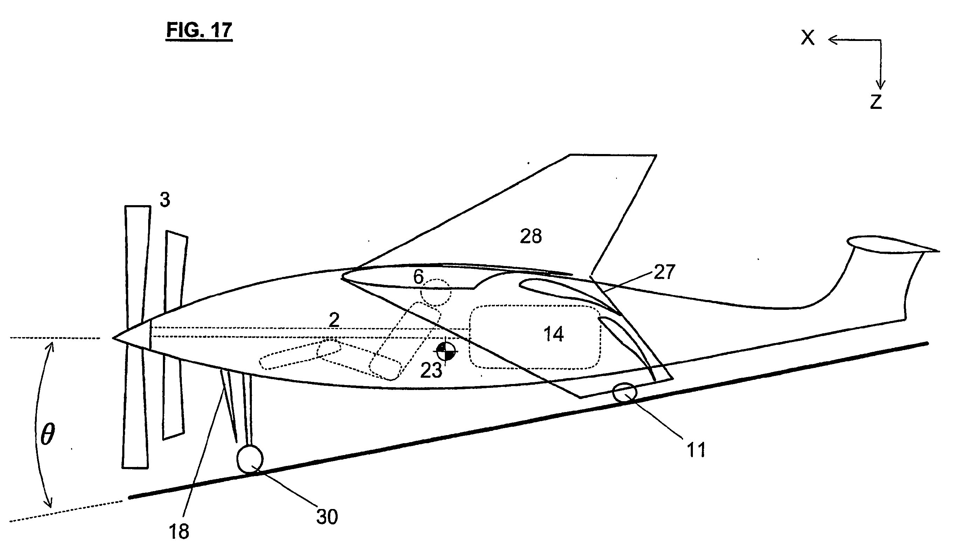

In an alternative embodiment, an aircraft **1** according to the invention only has one stable position, being the NUTOL position. The aircraft **1** according to this alternative is illustrated in figure **17.** This alternative would not require the over-center means of achieving the NUTOL position, or a tail support **13.** The main landing gear **11** is located near the tail, far aft of the center of gravity **23.** In order to obtain more stability on the ground, there are **2** nose wheels **30** instead of one. The forward nose wheels **30** are trailing, whereas as the rear main gear **11** are fixed, thus directional stability during take-off and landing is improved. Conventional horizontal take-off and landing is still possible in this alternative embodiment with a slightly retracted configuration of the high lift and drag devices.

### 6.11 Wing-tip Configuration

In a preferred embodiment, an aircraft **1** according to the invention comprises a wing-tip configuration (a combination of a end plate **27,** winglet **28,** and fuel tank **17)** that has a multitude of effects:
**■** enhances the moment of inertia about the roll axis,
■ minimizes the unwanted fuel surge in the y-direction,
■ creates a stabilizing fuel surge in the x-direction,
■ alleviates the wing bending moment, decreases internal loads,
■ complies with aviation certification rules regarding fuel tanks,
■ reinstates coordinated flight,
■ acts as a housing for the main undercarriage **11.**

### Endplates

According to the preferred embodiment, endplates **27** extend downward from the tips of the main wing **6.** The endplates **27** act as a means of containing the PGA **4** and pressure gradient below the main wing **6,** thereby enhancing the performance of the flaps. The endplates **27** also act as a guidance for the flap system **19,** thereby decreasing the internal loads. The endplates **27** could further be used as a housing for the main undercarriage **11.**

### Winglets

The presence of the endplates **27** destabilizes the aircraft in roll. The aircraft **1** is therefore provided with winglets **28** which extend outwards and upwards from the tips of the main wing **6** to stabilize the aircraft **1.** The winglets **28** act in conjunction with the endplates **27** to reinstate the stable benign roll moment thereby achieving coordinated flight.

The winglets **28** further serve to protect the inner portion of the wing from potential lightning strike. Fuel Tanks

Any aircraft is subject to instability due to fuel surge in the y-direction. Therefore, in a preferred embodiment, the aircraft **1** is comprised of fuel tanks **17** of cylindrical shape, with the longitudinal axis in the x-direction, thereby minimizing the fuel surge in the y-direction.

The aircraft **1** will have its smallest moment of inertia about the roll axis, and may, to be more conveniently flown by the pilot, require an enhancement of said moment of inertia. Therefore, according to a preferred embodiment of the invention, the fuel tanks **17** are mounted at the intersection of the winglets **28** and the endplates **27,** to enhance roll inertia.

in this position, the fuel tanks **17** are protected by the winglets **28** from lightning strike, and thus the aircraft **1** complies with new aviation certification rules.

The x-direction fuel surge in this shape tank **17** is beneficial since when switching from the CHTOL position to the NUTOL position, the contents of the fuel tanks **17** move toward the tail of the aircraft **1,** further stabilizing the aircraft **1** in the new position. The same stabilizing effect occur when returning to the CHTOL position.

The tip tanks **17** further serve to alleviate the wing bending moment about the x-axis.

### 6.12 Longitudinal Weight Trims

In accordance with a preferred embodiment of the invention, the aircraft **1** comprises a trim system for keeping the center of gravity in the longitudinal (x-direction) within narrow limits. Preferably, such trim systems may comprise simple compartments in the nose and the tail that are loaded with shot bags before take-off, in accordance with aircraft loading. Alternatively, the trim system may comprise aft and nose tanks, and means for pumping a liquid to and from said tanks.

The different features mentioned in the description are examples of how the invention may be implemented. The invention is only limited by the appended claims.

### List of features with corresponding reference signs:

**1** *aircraft*
**2** *fuselage*
**3** *thrust generating source*
**4** *propeller generated airflow (PGA)*
**5** *nose of the aircraft*
**6** *main wing*
**7** *leading edge slat on the main wing*
**10** *canard wing*
**11** *main gear wheel*
**12** *nose gear wheel*
**13** *tail support*
**14** *engine*
**15** *elevator*
**16** *rudder*
**17** *tip tank*
**18** *fuselage spoiler*
**19** *multi-Fowler type of flap*
**20** *trim flap on the canard wing*
**21** *vertical stabilizer*
**22** *horizontal stabilizer*
**23** *center of gravity*
**24** *ground*
**25** *protrusion*
**26** *cross section of propeller at radial position*
**27** *endplate*
**28** *winglet*
**29** *stator*
**30** *forward trailing landing gear*
**31** *duct*
**32** *duct nozzle*
**33** *ineffective airflow region*
**34** *hoists for attaching tail*
**35** *carry through area for flap spars*
**36** *effective airflow region*
**37** *cross section of stator at radial position*
**R** *Resultant Force*
**G** *Force due to gravity*
**T** *Thrust*
**L** *Total Lift*
**D** *Total Drag*
**L**_{**W**} *Lift from Wing*
**L**_{**S**} *Lift from fuselage spoiler*
**L**_{**F**} *Lift from Flaps*
**L**_{**L**} *Lift from leading edge device*
**D**_{**F**} *Drag from Flaps*
**D**_{**S**} *Drag from fuselage spoiler*
**LW** *Left Wing*
**RW** *Right Wing*
**L**_{**LW**} *Lift on Left Wing*
**L**_{**RW**} *Lift on Right Wing*
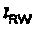 *angle of incidence of right wing*
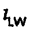 *angle of incidence of left wing*
*τ* *resultant engine torque*
*α* *angle of attack of stator blade*
*θ* *angle of NUTOL position*
*ω* *propeller rotation*
**N** *induced force on stator blades*

## Claims

1. A vertical take-off and landing aircraft (1) comprising a fuselage (2), a main wing (6) and a propeller, the propeller being positioned forward of the wing (6) and in the vertical mid-plane of the fuselage (2), and being adapted to generate an airflow (4) over the wing (6), thereby creating dynamic air at no horizontal speed and enabling vertical flight;
the wing (6) being fixed, without any hinge mechanism, to the fuselage with a constant angle of incidence, said wing carrying the aircraft weight during flight;
attitude control means namely for roll, pitch and yaw control, of said aircraft comprising aerodynamic control surfaces positioned within said propeller generated airflow, PGA, (4) and in areas of induced pressure gradients from said propeller generated airflow;
**characterized in that**
the propeller is a single constant speed propeller (3), either free or ducted, and adapted for propelling the aircraft during all modes of flight, including vertical flight, horizontal flight, and transitional flight between vertical and horizontal flight;
said propeller employs a constant speed control system during vertical and transitional flight regimes in order to avoid inertial propeller torque; and by
a stator, either ducted or non-ducted, for compensating an aerodynamic torque produced by said propeller, said stator comprising blades fixed to the fuselage, the number thereof being at least 3 blades, while preferably in the order of 6 to 20 blades, said stator being positioned directly downstream of the propeller, at a minimal distance from the propeller where the angular velocity component of the downstream propeller airflow (4) is highest and thus minimal surface area of the stator blades is required to effectively counter the propeller torque, said distance being from one half to three propeller blade chord lengths, a distance large enough to reduce siren effect, each of said stator blades having a radial twist (37) corresponding to the radial twist of the propeller blades (26) such that the downstream propeller airflow remains attached to each of the said stator blades throughout their radial extension, said stator blades having a radial length between 0,4 and 1,5 times the radial length of the propeller blades.

2. Aircraft according to claim 1, wherein said propeller (3) is ducted and comprises a nozzle (32) which redirects the otherwise ineffective airflow (33) in the direction of the aerodynamic surfaces.

3. Aircraft according to claim 1, wherein said propeller is ducted such that the duct rotates with the propeller blades and the blades acts as spokes of the duct.

4. Aircraft according to any one of claims 1 - 3, whereby the rotor blades of said propeller are positioned such that the angles between the blades are not equal, thereby reducing the noise produced by the propeller while the off-balanced centrifugal forces caused by this arrangement of the blades is re-balanced by means of static weights on the appropriate blades.

5. Aircraft according to any of the preceding claims, further comprising high lift and high drag devices positioned within the propeller generated airflow, said high lift and drag devices being retractable, thus enabling transitional flight between vertical flight and conventional horizontal flight.

6. Aircraft according to claim 5, wherein said high lift and high drag devices are of a trailing edge nature, comprising downwardly deflecting and backwardly extending flaps (19a, 19b, 19c), such as multi-Fowler type or Handley page type flaps.

7. Aircraft according to claim 6, whereby said trailing edge flaps are single full wingspan flap extending through the fuselage.

8. Aircraft according to any one of claims 5 to 7, whereby said high lift and high drag devices further comprise forward extending leading edge devices, such as a slat, a nose flap or a Krueger flap (7); said leading edge device improving lift capabilities but having little effect on drag.

9. Aircraft according to any one of the preceding claim, comprising a fuselage spoiler (18) consisting of a flat plate hinged such that it is flush with the fuselage surface when retracted and produces a high drag due to stalled flow as it is extended, said fuselage spoiler (18) arranged underneath the fuselage (2) between the thrust generating source (3) and the center of gravity (23) such that said fuselage spoiler (18) acts as a means of balancing the pitch attitude of said aircraft (1) in take-off or landing, thereby avoiding pitch attitude offset created by the pressure build-up around the extended flaps aft of the center of gravity in ground effects.

10. Aircraft according to any of the preceding claims, whereby the main wing (6) further comprises a wing-tip configuration consisting of two downwardly extending endplates (27) in combination with two upwardly and outwardly extending winglets (28) positioned at the ends of the main wing; said endplates (27) providing a containment for the PGA (4) and for the pressure below the wing; said winglets stabilizing the aircraft by countering the destabilizing effect of the endplates, re-establishing coordinated flight; said winglets (28) further serving to protect the inner portion of the wing from potential lightning strikes.

11. Aircraft according to claim 10 whereby said endplates (27) further serve as a guidance system for wing trailing edge and leading edge retractable high lift and high drag devices according to claims 6 and 8.

12. Aircraft according to either claim 10 or 11 whereby said endplates (27) further serve as a housing for the main landing gear (11).

13. Aircraft according to any of the preceding claims further comprising fuel tanks of x-wise (longitudinally) elongated geometry, such as cylinder or pipes with minimal dimension in the y-direction, thereby further stabilizing the aircraft by minimizing the lateral (or y-direction) fuel surge.

14. Aircraft according to claims 10 to 13, whereby said fuel tanks (17) are positioned at the intersection of the winglets and the endplates, where they are most effective in alleviating the wing-bending moments during flight and in enhancing the roll inertia.

15. Aircraft according to any of the preceding claims, further comprising a tail support (13) positioned aft of a main gear wheel (11) and underneath the fuselage (2), whereby the aircraft (1) is positioned such that it is stable in a nose-up take-off and landing position, NUTOL, on the main gear wheel (11) and the tail support (13) with the main gear wheel (11) and the tail support (13) being in the same horizontal plane, due to the position of the center of gravity (23) between said main gear wheel and said tail support.

16. Aircraft according to claim 15, whereby said NUTOL position is further stabilized by the x-wise fuel surge in said fuel tanks (17) shifting said center of gravity (23) further aft.

17. Aircraft according to any one of claims 15 and 16, whereby said tail support (13) further comprises a shock absorber in order to attenuate shocks when landing the aircraft.

18. Aircraft according to any one of claims 15 to 17, whereby said tail support (13) is of adjustable length in order to take account to a non-horizontal ground at take-off or landing and of operational variation of the center of gravity (23).

19. Aircraft according to any of the preceding claims, further comprising a nose gear wheel (12) in the nose of the aircraft (1), whereby the aircraft (1) is stable in a conventional horizontal take-off and landing, CHTOL, position on the nose gear (12) and on the main gear wheel (11) being in the same horizontal plane, due to the position of the center of gravity (23) between the main landing gear and the nose gear wheel.

20. Aircraft according to any of the preceding claims, whereby the landing gear comprises two trailing forward wheels and two aft fixed wheels (30), with the center of gravity (23) positioned between the two sets of wheel thereby providing a stable NUTOL position.

21. Aircraft according to claim 8, whereby said torque caused by the propeller is further compensated during vertical flight by said leading edge device having greater extension, thus greater lift, on one wing than the other, i.e. left or right.

22. Aircraft according to any of the preceding claims, whereby said torque caused by the propeller is further compensated by means of the main wing (6) having a different angle of incidence, and/or having different profile effectiveness, and/or being of different sizes on the left and the right side of the aircraft (1).

23. Aircraft according to any one of the preceding claims, comprising a static weight on either the right or left main wing (6) for compensating a torque produced by said propeller (3).

24. Aircraft according to any one of the preceding claims, whereby said stator blades further comprise trailing edge trim flaps respectively to account for changes in the rotational airflow component.

25. Aircraft according to any one of claims 10 to 24, further comprising a trim flap being positioned on said winglet (28) and functioning to compensate the torque caused by the propeller.

26. Aircraft according to either claims 24 and 25, whereby said trim flaps are mechanically actuated by a throttle, thereby providing for the difference in resultant torque at different thrust levels.

27. Aircraft according to any one of the preceding claims, wherein the propeller blades are configured to produce an airflow with a rotational velocity; said rotational velocity inducing greater lift on one wing than the other to counteract the torque caused by said propeller.

28. Aircraft according to any of the preceding claims, wherein spoilers, either ventilated or non-ventilated, are positioned either within said PGA or within the area affected by the pressure gradient created by said PGA, thereby enabling roll control.

29. Aircraft according to any of the preceding claims further comprising rudder and elevator controls mounted on the aircraft empennage whereby said rudder and elevator controls are exposed to the propeller generated airflow (4) and are conditioned with respect to size and position for vertical flight.

30. Method for achieving NUTOL position of the aircraft according to any one of claims 15-29, comprising the following steps:
positioning the aircraft (1) in a horizontal position on the nose gear wheel (12) and on the main gear wheel (11),
applying reverse thrust to the thrust generating source (3) while the main gear wheel is locked in position, thereby tilting the aircraft (1) to a stable nose-up pitched on the main gear wheel (11) and on the tail support (13).

31. Method for vertical take-off of the aircraft according to any one of claims 15 to 29, comprising the following steps:
positioning the aircraft (1) in the NUTOL position on the ground (24)
lifting said aircraft (1) vertically in the NUTOL position by means of increasing the force of propeller (3), thereby increasing the propeller generated airflow (4) and the induced lift on the main wing (6).

32. Method for vertical landing of aircraft according to any of claims 15 to 29, said method comprising the following steps:
increasing the angle of attack of the aircraft to achieve vertical flight,
during vertical flight, reducing the thrust from said thrust generating source (3) thereby reducing the induced lift on the wings, resulting in a vertical descent.
making a vertical touch down in the NUTOL position.

33. Method for transition from vertical flight to horizontal flight of the aircraft according to any one of the preceding claims, the method comprising the steps of: gradual retraction of all high drag devices to gradually reduce drag to a minimum thereby enabling optimal forward horizontal flight; retracting the high lift and drag devices so as to obtain the original wing profile and retracting the fuselage spoiler to its position flush with the fuselage surface.

## Patentansprüche

1. Ein senkrecht startenden und senkrecht landendes Flugzeug (1) bestehend aus einem Rumpf (2), einem Hauptflügel (6) und einem Propeller, wobei der Propeller vor dem Hauptflügel (6) und in der Mittelebene des Rumpfes (2) positioniert ist. Dabei ist der Propeller geeignet einen Luftstrom (4) über dem Flügel (6) zu generieren und somit bewegt die Luftströmung bei 0 Vorwärtsgeschwindigkeit des Flugzeuges bereit zu stellen und somit einen Vertikalflug zu ermöglichen.
Das Prinzip wird charakterisiert **dadurch**, dass der Flügel (6) fest ist ohne irgendwelche Drehmechanismen zum Rumpf mit einem konstanten Einbauwinkel, wobei der besagte Flügel das Gewicht des Flugzeuges während aller Flugphasen trägt.
Das Ladekontrollsystem für Roll-, Nick- und Gierkontrolle des besagten Flugzeuges bestehend aus aerodynamischen Kontrollflächen welche innerhalb des PGA (4) positioniert sind und in Bereichen induzierter Druckgradienten des besagten Propellers liegen.
Der Propeller ist ein constant speed Propeller (3), entweder frei oder ummantelt und so gebaut das er das Flugzeug während aller Flugphasen inklusive dem Vertikalflug, dem Horizontalflug und den Transitionsphasen dazwischen antreibt.
Der besagte Propeller enthält eine constant speed Regelung welche dafür sorgt das während dem Vertikalflug und der Transition keinerlei inertial Propellermomente auftreten können.
Ein Stator entweder frei oder ummantelt welcher dazu dient das aerodynamische Moment welches von dem besagten Propeller generiert wird zu kompensieren. Der besagte Stator besteht aus feststehenden Blättern die am Rumpf montiert sind. Die Anzahl der Statorblätter beträgt wenigsten drei wenn vorzugsweise von 6 bis 20 solcher Statorblätter Verwendung finden. Besagter Stator ist direkt hinter dem Propeller in Strömungsrichtung gesehen positioniert bei einer minimalen Entfernung von dem Propeller wo die Drallkomponente der vom Propeller (4) abstimmenden Luft am höchsten ist und somit die geringste Fläche für die Statorblätter notwendig wird um das Propellerdrehmoment effektiv zu kompensieren. Die besagte Distanz beträgt zwischen einer halben und drei Blatttiefen, eine solche Distanz wird so gewählt das das hier erwartete Sireneneffekt deutlich reduziert ist, jedes der besagten Statorblätter besitzt eine radiale Verbindung (37) welche korrespondiert mit der radialen Verbindung der Propellerblätter (26) in der Form das der Abwind hinter dem Propellerstrom anliegend bleibt an jedem der Statorblätter während ihrer gesamten radialen Ausdehnung. Besagte Statorblätter haben eine radiale Länge zwischen 0,4 und 1,5 mal der radialen Länge des vor geschalteten Propellerblattes

2. Ein Flugzeug gemäß dem Anspruch 1, wobei der besagte Propeller (3) ummantelt ist und eine Düse (32) besitzt welche den ansonsten unbenutzten Teil des Luftstroms (33) in die Richtung der aerodynamischen Flächen lenkt.

3. Ein Flugzeug gemäß Anspruch 1, wobei der besagte Propeller ummantelt ist in der Form das der Mantel mit rotiert mit den Propellerblättern und die Propellerblätter wie Speichen einer Säge wirken.

4. Ein Flugzeug gemäß den Ansprüchen 1 bis 3, wobei die Rotorblätter des besagten Propellers so positioniert sind das deren Abstand zueinander nicht gleichmäßig ist, was einen lärm reduzierenden Effekt zu Folge hat der von dem Propeller produziert wird, wobei die zentrifugale Unwucht die von einem solchen ungleichmäßigen Abstandsaragement erzeugt wird durch geeignete statische Gewichte in der geeigneten Weise gegen balanciert und ausgeglichen wird.

5. Ein Flugzeug gemäß aller vorangehenden Ansprüche, welches besteht aus Hochauftriebs- und Hochwiderstandskomponenten welche im propellergeneriertem Luftstrom positioniert sind, wobei besagte Hochauftriebs- und Hochwiderstandselemente einziehbar sind, und daher ein Übergang zwischen Vertikalflug und konventionellen Horizontalflug ermöglichen.

6. Ein Flugzeug gemäß Anspruch 5, wobei die besagten Hochauftriebs- und Hochwiderstandselemente typischerweise hinter dem Flügel angebaut sind, und **dadurch** eine nach hinten unten Auslenkung der Klappensysteme (19a, 19b, 19c) ermöglichen sowie mehrfach Fowlerklappen oder Handley page Klappen.

7. Ein Flugzeug gemäß Anspruch 6, wobei die besagten Landeklappen sich über die gesamte Flügelspannweite erstrecken und dabei von links nach rechts durch den Rumpfdurchbruch hindurch tragen.

8. Ein Flugzeug gemäß der Ansprüche 5 bis 7, wobei die besagten Hochauftriebs- und Hochwiderstandselemente außerdem vorne eine Nasenklappe aufweisen, eine Nasenklappe wie z. B. einen slat oder einen Krüger flap (7) wobei solche Nasenklappen ebenfalls den Auftrieb steigern aber wenig Einfluss auf den Widerstand haben.

9. Ein Flugzeug gemäß aller vorangehenden Ansprüche, bestehend aus einem Rumpfspoiler (18) welcher seinerseits besteht aus einer geraden Platte die so angelegt ist das sie plan mit dem Rumpf ist falls sie eingezogen ist und auf der anderen Seite einen hohen Widerstand produziert durch Strömungsabriss weil sie ausgefahren wird. Besagte Rumpfspoiler (18) angebaut unter dem Rumpf (2) zwischen der schuberzeugenden Quelle (3) in Längsrichtung gesehen und dem Schwerpunkt (23). Solch ein Rumpfspoiler (18) fungiert als ein Nickbalanceelement des besagten Flugzeuges (1) während der Start- und Landephase wobei diese Nickbalance erreicht wird durch einen Ausgleich vor dem Schwerpunkt des Druckaufbaues und der erhöhten Wirksamkeit der hinter dem Schwerpunkt sitzenden Landeklappe im Bodeneffekt.

10. Ein Flugzeug gemäß aller vorangehenden Ansprüche, wobei der Hauptflügel (6) weiter enthält eine spezielle Flügelspitzenkonfiguration welche besteht aus zwei nach unten gerichteten Endscheiben (27) in Kombination mit zwei auswärts sich erstreckenden winglets (28) positioniert am Ende links und rechts des Hauptflügels. Die besagten Endscheiben (27) bewirken eine Kanalisierung des PGA (4) und des Überdrucks unter dem Flügel. Besagten winglets stabilisieren das Flugzeug indem sie den instabilen Anteil der durch die nach unten gerichteten Endscheiben bewirkt wird ausgleichen zum einen außerdem einen koordinierten Flugzustand damit erzeugen. Die besagten winglets (28) schützen außerdem den inneren Teil des Flügels vor einem potenziellen Blitzschlag.

11. Ein Flugzeug gemäß Anspruch 10, wobei die besagten Endscheiben (27) auch verwendet werden als mechanisches Führungssystem für die unter dem Flügel angebauten Klappensysteme sowie für die vor dem Flügel liegenden Nasenklappen gemäß den Ansprüchen 6 und 8.

12. Ein Flugzeug gemäß entweder Anspruch 10 oder 11, wobei die besagten Endscheiben (27) außerdem eine Behausung für das Hauptfahrwerk (11) darstellen.

13. Ein Flugzeug gemäß aller vorangehenden Ansprüche welches außerdem enthält Treibstofftanks mit einer longitudinalen Ausdehnung in X-Richtung, ähnlich Zylindern oder Rohren mit einer jeweils minimalen Dimension in der Y-Richtung, und daher das Flugzeug weiter stabilisieren durch eine Minimierung der lateral (Y-Richtung) möglichen Treibstoffverlagerung.

14. Ein Flugzeug gemäß der Ansprüche 10 bis 13, wobei die besagten Treibstofftanks (17) eingebaut sind am Schnittpunkt der winglets mit den Endscheiben, dort sind sie am effektivsten um die Flügelwurzelmomente während dem Flug zu kompensieren sowie auch um die Rollträgheit zu vergrößern.

15. Ein Flugzeug gemäß aller vorangehenden Ansprüche welches im weiteren besteht aus einem Hecksporn (13), welcher positioniert ist hinter dem Hauptfahrwerk (11) und unter dem Rumpf (2), wobei das Flugzeug (1) mit diesem Hecksporn eine stabile Nase nach oben Position für Start und Landung (NUTOL) erreicht während es auf dem Hauptfahrwerk (11) und auf dem Hecksporn (13) sitzt und dabei das Hauptfahrwerk und der Hecksporn in etwa die Selbe horizontale Höhe haben, wobei die Position des Schwerpunkts (23) zwischen dem besagten Hauptfahrwerk und dem Hecksporn liegt.

16. Ein Flugzeug gemäß Anspruch 15, wobei die besagte NUTOL - Position zusätzlich stabilisiert wird durch die Treibstoffverlagerung in X-Richtung der besagten Treibstofftanks (17) wobei sie mitwirken damit sich der Schwerpunkt (23) nach hinten verlagern kann.

17. Ein Flugzeug gemäß der Ansprüche 15 und 16, wobei der Hecksporn (13) im weiteren ein Dämpfungselement enthält welcher die Stöße bei der Landung des Flugzeuges abfedern kann.

18. Ein Flugzeug gemäß aller vorangehenden Ansprüche 15 bis 17, wobei der besagte Hecksporn (13) eine variable Länge besitzen kann um einen nicht genau waagerechten Boden auszugleichen für das Start- und Landeverfahren oder auch um eine operationelle Variation des Schwerpunktes (23) herbeizuführen.

19. Ein Flugzeug gemäß aller vorangehenden Ansprüche, welches außerdem ein Bugrad in der Nase des Flugzeuges (1) hat, wobei das Flugzeug (1) stabil steht in einer konventionellen horizontalen Start- und Lande-, CHTOL, Position auf dem Bugfahrwerk (12) und dem Hauptfahrwerk (11) steht welche in der gleichen horizontalen Lage sind und weil der Schwerpunkt (23) sich zwischen dem Hauptfahrwerk und dem Bugfahrwerk befindet.

20. Ein Flugzeug gemäß aller vorangehenden Ansprüche, wobei das Fahrwerk aus zwei nachlaufenden vorne liegenden Rädern und zwei festen nicht drehenden Rädern hinten (30) besteht, wobei der Schwerpunkt (23) zwischen den beiden Radsätzen liegt und gleichzeitig eine stabil NUTOL - Position hergestellt ist.

21. Ein Flugzeug gemäß Anspruch 8, wobei das besagte Propellerdrehmoment außerdem kompensiert wird während dem Flug durch die besagten Nasenklappen welche weiter ausgefahren werden und einen größeren Auftrieb einseitig erzeugen auf einem Flügel als auf dem anderen und dies kann beispielsweise links oder rechts der Fall sein.

22. Ein Flugzeug gemäß aller vorangehenden Ansprüche, wobei der besagte Propellerdrehmoment außerdem kompensiert werden kann durch unterschiedliche Einbauwinkel des Flügels (6) oder durch unterschiedliche Profileffektivitäten und oder durch unterschiedliche Größen auf der linken und rechten Seite respektive des Flugzeuges (1).

23. Ein Flugzeug gemäß aller vorangehenden Ansprüche, bestehend aus einem statischen Gewicht auf einer der Seiten des Hauptflügels (6) links oder rechts um das besagte vom Propeller produzierte Drehmoment kompensieren zu können.

24. Ein Flugzeug gemäß aller vorangehenden Ansprüche, wobei die besagten Statorblätter außerdem kleine Trennplatten an deren rückwärtigen Ende besitzen um Änderungen im Drall des Luftstroms ausgleichen zu können.

25. Ein Flugzeug gemäß den Ansprüchen 10 bis 24, welches außerdem sein Trimmklappensystem enthält welches an dem besagten winglet (28) angebaut ist und geeignet ist Propeller erzeugte Drehmomente zu kompensieren.

26. Ein Flugzeug gemäß der Ansprüche 24 und oder 25, wobei die besagten Trimmklappen mechanisch an den Schubhebel angelenkt sein können, wobei entsprechend der gesetzten Leistungseinstellung das erzeugte Drehmoment automatisch ausgeglichen würde.

27. Ein Flugzeug gemäß aller vorangehenden Ansprüche, wobei die Propellerblätter so konfiguriert werden können, dass sie einen Drall in der Strömung verursachen, dieser Drall einseitig einen größeren Auftrieb auf einen Flügel erzeugt als auf der anderen Seite um so das Drehmoment das vom Propeller selbst erzeugt wird am Flügel zu kompensieren.

28. Ein Flugzeug gemäß aller vorangehenden Ansprüche, wobei Spoiler entweder belüftet oder unbelüftet innerhalb des besagten PGA positioniert sind oder innerhalb des Bereichs auf dem Flügel der von dem Druckunterschied zwischen oben und unten der von dem PGA erzeugt wird noch betroffen ist und daher eine Rollsteuerung ausüben.

29. Ein Flugzeug gemäß aller vorangehenden Ansprüche, bestehend aus einem Seitenruder und einem Höhenruder die am Heckleitwerk befestigt sind wobei die besagten Seiten- und Höhenruder in den PGA eingetaucht sind und gleichzeitig bezüglich Größe und Lage für den vertikalen Flug dimensioniert sind.

30. Methode um die NUTOL - Position des Flugzeuges zu erreichen gemäß den Ansprüchen 15-29 welche aus den folgenden Schritten besteht:
Flugzeug (1) in eine horizontale Lage zu positionieren auf dem Bugfahrwerk (12) und auf dem Hauptfahrwerk (11).
Umkehrschub anzuwenden an der schuberzeugenden Quelle (3) während die Hauptfahrwerksräder durch Bremsen blockiert sind und daher das Flugzeug (1) in die stabile NUTOL - Position um das Hauptfahrwerk (11) herum auf den Hecksporn (13) dreht.

31. Methode für senkrecht Start eines Flugzeuges gemäß den Ansprüchen 15 - 29 bestehend aus den folgenden Schritten:
1. Das Flugzeug (1) in der NUTOL - Position auf den Boden (24) zu positionieren.
2. Das Flugzeug (1) vertikal von der NUTOL - Position aus abzuheben durch erhöhen der Propellerkraft (3) und dabei eine Erhöhung des PGA (4) und des induzierten Auftriebs am Hauptflügel (6).

32. Methode für die vertikale Landung eines Flugzeuges gemäß den Ansprüchen 15 bis 29, wobei die besagte Methode aus folgenden Schritten besteht:
1. Erhöhung des Anstellwinkel des Flugzeuges um einen Vertikalflug zu erreichen,
2. während diesem vertikalen Flug den Schub zu reduzieren von der gesagten Schubquelle (3) und damit den erzeugten Auftrieb über dem Flügel zu reduzieren was wiederum in eine vertikale Sinkbewegung mündet.
3. Ein vertikales Aufsetzen in der NUTOL - Position.

33. Methode für die Transition vom Vertikalflug in den Horizontalflug eines Flugzeuges gemäß aller vorangehenden Ansprüche, wobei die Methode aus folgenden Schritten besteht:
Allmähliche Retraktion (einfahren aller Hochwiderstandselemente) um allmählich den Widerstand zu reduzieren und gleichzeitig einen optimalen vorwärts Horizontalflug zu beginnen. Die Hochauftriebs- und Hochwiderstandselemente werden so eingefahren, dass das Originalflügelprofil sich wieder einstellt und die Rumpfspoiler so eingefahren werden das sie wieder plan mit dem Rumpf sind.

## Revendications

1. Un aéronef (1) à décollage et atterrissage vertical comprenant un fuselage (2), une aile maîtresse (6) et une hélice, l'hélice étant placée en avant de l'aile (6) et dans le demi-plan vertical du fuselage (2), et étant adaptée à générer un écoulement d'air (4) au-dessus de l'aile (6), créant ainsi, à une vitesse horizontale nulle, un flux d'air dynamique permettant le vol vertical;
**caractérisé par le fait que** l'aile (6) est fixée au fuselage sans aucun mécanisme d'articulation et avec un angle d'incidence constant, laquelle aile supporte le poids de l'aéronef pendant le vol;
des moyens de commande de l'assiette, c'est à dire pour le contrôle du roulis, du tangage et du lacet, du dit aéronef comprenant des gouvernes aérodynamiques placées dans le flux d'air généré par le souffle de ladite hélice, FAGSH (PGA) (4), et à l'intérieur de zones de gradients de pression induits par ledit flux d'air généré par le souffle de l'hélice;
l'hélice est une hélice unique à vitesse constante (3), ou bien libre ou bien carénée, et adaptée pour propulser l'aéronef pendant tous les modes de vol, aussi bien le vol vertical, que le vol horizontal ou le vol de transition entre le vol vertical et le vol horizontal;
ladite hélice emploie un système de contrôle de vitesse constante pendant les phases de vol vertical et de transition de manière à éviter le couple inertiel de l'hélice;
un stator, ou bien caréné ou bien non caréné, pour compenser un couple aérodynamique produit par ladite hélice, ledit stator comprenant des aubes fixées au fuselage, lesquelles sont au nombre de 3 au moins, quoique de préférence de l'ordre de 6 à 20 aubes, ledit stator étant situé directement en aval dans le lit du vent de l'hélice, à une distance minimale de l'hélice où la composante de vitesse angulaire du souffle de l'hélice (4) en aval de celle-ci est la plus élevée, faisant que seule une surface minimale des aubes du stator soit nécessaire pour contrer efficacement le couple de l'hélice, laquelle distance étant de une demie à trois longueurs de corde de pale d'hélice, une distance suffisamment grande pour réduire l'effet de sirène, chacune des aubes dudit stator ayant une torsion radiale (37) correspondant à la torsion radiale des pales de l'hélice (26) de sorte que l'écoulement d'air du souffle de l'hélice en aval de celle-ci ne décroche pas de chaque aube dudit stator tout au long de leur prolongement radial, lesdites aubes du stator ayant une longueur radiale comprise entre 0,4 et 1,5 fois la longueur radiale des pales de l'hélice.

2. Aéronef conforme à la revendication 1, dans lequel ladite hélice (3) est carénée et comprend une buse (32) qui dévie et dirige l'écoulement d'air, qui autrement serait inefficace (33), dans la direction des surfaces aérodynamiques.

3. Aéronef conforme à la revendication 1, chez lequel ladite hélice est carénée de telle façon que le carénage tourne avec les pales de l'hélice et que les pales servent de rayons au carénage.

4. Aéronef conforme à n'importe laquelle des revendications de 1 à 3 y compris, chez qui les pales d'hélice de ladite hélice sont disposées de telle façon que les angles compris entre les pales ne sont pas égaux, diminuant de ce fait le bruit produit par l'hélice, tandis que les forces centrifuges déséquilibrées causées par cette disposition des pales sont ré-équilibrées au moyen de masses statiques disposées sur les pales appropriées.

5. Aéronef conforme à n'importe laquelle des revendications précédentes, comprenant en outre des dispositifs hypersustentateurs et des dispositifs générant une forte traînée, disposés au sein de l'écoulement d'air généré par le souffle de l'hélice, lesquels dispositifs hypersustentateurs ainsi que ceux générant une forte traînée étant rétractables, permettant de ce fait la phase de vol de transition entre le vol vertical et le vol horizontal conventionnel.

6. Aéronef conforme à la revendication 5, chez lequel lesdits dispositifs hypersustentateurs et dispositifs générant une forte traînée sont du genre de bord de fuite, comprenant des volets (19a, 19b, 19c) se braquant vers le bas tout en se déployant vers l'arrière, tels que des volets de type multi-Fowler ou de type Handley Page.

7. Aéronef conforme à la revendication 6, chez qui lesdits volets de bord de fuite sont des volets unitaires le long de toute l'envergure de l'aile maîtresse et passant à travers le fuselage.

8. Aéronef conforme à n'importe laquelle des revendications de 5 à 7, où lesdits dispositifs hypersustentateurs et ceux générant une forte traînée comprennent en plus des dispositifs de bord d'attaque se déployant vers l'avant, tels que bec de bord d'attaque, volet avant ou volet Krueger (7); ledit dispositif de bord d'attaque améliorant les capacités de portance tout en n'ayant que peu d'effet sur la traînée.

9. Aéronef conforme à n'importe laquelle des revendications précédentes, comprenant un volet déflecteur (18) de fuselage consistant en une plaque plane articulée de telle façon qu'elle soit de niveau avec le fuselage quand elle est rétractée, et qu'elle génère une forte traînée due au décrochage de l'écoulement de l'air lorsqu'elle est déployée, ledit volet déflecteur du fuselage (18) étant disposé sous le fuselage (2) entre la source génératrice de poussée (3) et le centre de gravité (23) de telle façon que ledit volet déflecteur du fuselage (18) se comportât comme un moyen d'équilibrer l'assiette en tangage dudit aéronef (1) tant au décollage qu'à l'atterrissage, évitant ainsi un décalage d'assiette en tangage créé pendant l'effet de sol par l'accumulation de pression autour des volets déployés en arrière du centre de gravité.

10. Aéronef conforme à n'importe quelle des revendications précédentes, chez qui l'aile maîtresse (6) comprend en outre une configuration de bout d'aile consistant en deux flasques d'extrémité (27) se prolongeant vers le bas et combinées avec deux ailettes d'extrémité de voilure (28) se prolongeant vers l'extérieur et vers le haut, situées aux extrémités de l'aile maîtresse; lesdites flasques d'extrémité (27) fournissant ainsi une retenue pour le FAGSH (PGA) (4) ainsi que pour la pression sous les ailes; lesdites ailettes d'extrémité de voilure stabilisant l'aéronef en contrant les effets déstabilisants des flasques d'extrémité, rétablissant le vol coordonné; lesdites ailettes d'extrémité de voilure (28) servant en outre à protéger la partie intérieure de l'aile d'éventuelles frappes par la foudre.

11. Aéronef conforme à la revendication 10, chez qui lesdites flasques d'extrémité servent de système de guidage aux dispositifs installés en bord d'attaque et en bord de fuite de l'aile, dispositifs hypersustentateurs et dispositifs générateurs de forte traînée, conformément aux revendications 6 et 8.

12. Aéronef conforme aussi bien à la revendication 10 qu'à la revendication 11 où lesdites flasques d'extrémité (27) servent en outre de logement à l'atterrisseur principal (11).

13. Aéronef conforme à n'importe quelle des revendications précédentes comprenant en outre des réservoirs de carburant de géométrie allongée dans le sens-x (longitudinalement), comme des cylindres ou des tuyaux avec leur dimension minimale dans le sens-y, stabilisant de ce fait d'autant plus l'aéronef en minimisant les à-coups du flux de carburant dans le sens latéral (direction-y).

14. Aéronef conforme aux revendications 10 à 13, chez lequel lesdits réservoirs de carburant (17) sont situés à l'intersection des ailettes d'extrémité de voilure et des flasques d'extrémité, où ils sont le plus efficaces pour soulager les moments de flexion des ailes pendant le vol et pour rehausser l'inertie en roulis.

15. Aéronef conforme à n'importe quelle des revendications précédentes, comprenant en outre un support de queue (13) situé en arrière d'un atterrisseur principal (11) et sous le fuselage (2), grâce à quoi l'aéronef (1) est placé de telle manière qu'il est stable en position de décollage et d'atterrissage à assiette fortement cabrée, DAAFC *(NUTOL),* reposant à la fois sur l'atterrisseur principal (11) et sur le support de queue (13) avec l'atterrisseur principal (11) et le support de queue (13) tous deux situés sur le même plan horizontal, cela étant dû à la position du centre de gravité (23) situé entre ledit atterrisseur principal et ledit support de queue.

16. Aéronef conforme à la revendication 15 chez lequel ladite position DAAFC *(NUTOL)* est en outre stabilisée par l'à-coup du flux de carburant dans la direction-x à l'intérieur desdits réservoirs de carburant (17) déplaçant encore plus vers l'arrière ledit centre de gravité (23).

17. Aéronef conforme à n'importe laquelle des revendications 15 et 16, chez qui le support de queue (13) comprend en outre un amortisseur destiné à atténuer les chocs lors de l'atterrissage de l'aéronef.

18. Aéronef conforme à n'importe laquelle des revendications 15 à 17, chez qui ledit support de queue (13) est réglable en longueur afin de prendre en compte le fait que le sol puisse ne pas être horizontal lors du décollage ou de l'atterrissage, et aussi pour s'adapter à la variation opérationnelle du centre de gravité (23).

19. Aéronef conforme à n'importe quelle des revendications précédentes, comprenant en outre un atterrisseur avant à roulette (12) dans le nez de ('aéronef (1), grâce à quoi l'aéronef est stable lorsqu'il est dans une position de décollage et d'atterrissage horizontal conventionnel, DAHC *(CHTOL),* reposant à la fois sur l'atterrisseur avant (12) et sur l'atterrisseur principal (11) à roues, atterrisseurs tous deux situés sur le même plan horizontal, cela étant dû à la position du centre de gravité (23) situé entre l'atterrisseur principal et l'atterrisseur avant.

20. Aéronef conforme à n'importe laquelle des revendications précédentes, chez qui l'atterrisseur est compris de deux roues avant de type articulé "tiré" et de deux roues arrières fixes (30), avec le centre de gravité (23) situé entre les deux ensembles de roues offrant ainsi une position DAAFC *(NUTOL)* stable.

21. Aéronef conforme à la revendication 8, chez qui ledit couple causé par l'hélice est en outre compensé lors du vol vertical par le fait que lesdits dispositifs de bord d'attaque aient un déploiement supérieur, et donc plus de portance, sur une aile plus que sur l'autre, c'est à dire à gauche ou à droite.

22. Aéronef conforme à n'importe quelle des revendications précédentes, chez qui ledit couple causé par l'hélice est en outre compensé au moyen de différents angles d'incidence et/ou de différences d'efficacité de profil et/ou de différences de taille de l'aile maîtresse (6) du côté gauche et du côté droit de l'aéronef.

23. Aéronef conforme à n'importe laquelle des revendications précédentes, comprenant une masse statique sur l'aile maîtresse (6), soit du côté gauche soit du côté droit aux fins de compensation du couple produit par ladite hélice (3).

24. Aéronef conforme à n'importe laquelle des revendications précédentes, chez qui lesdites aubes du stator comprennent en outre respectivement des volets de compensation pour prendre en compte les changements dans la composante de l'écoulement rotatif de l'air.

25. Aéronef conforme à n'importe quelle des revendications de 10 à 24, comprenant en outre un volet de compensation situé sur ladite ailette d'extrémité de voilure (28) et fonctionnant de manière à compenser le couple causé par l'hélice.

26. Aéronef conforme aussi bien à la revendication 24 qu'à la revendication 25, chez qui lesdits volets de compensation sont activés mécaniquement par une manette des gaz, compensant ainsi les différences de couple dues à différents niveaux de poussée.

27. Aéronef conforme à n'importe laquelle des revendications précédentes, chez qui les pales de l'hélice sont configurées de façon à produire un écoulement d'air ayant une vitesse de rotation; ladite vitesse de rotation induisant une portance supérieure sur une aile par rapport à l'autre afin de contrer le couple causé par ladite hélice.

28. Aéronef conforme à n'importe laquelle des revendications précédentes, chez qui les volets déflecteurs *(spoilers),* qu'ils soient ventilés ou non ventilés, sont disposés soit à l'intérieur dudit FAGSH *(PGA)* soit à l'intérieur de la zone affectée par le gradient de pression créé par ledit FAGSH *(PGA)*, permettant de la sorte de contrôler le roulis.

29. Aéronef conforme à n'importe laquelle des revendications précédentes, comprenant en outre des gouvernes de direction et de profondeur montées sur l'empennage de l'aéronef et où lesdites gouvernes de direction et de profondeur sont d'une part exposées au flux d'air généré par le souffle de l'hélice (4) et d'autre part conçues, en ce qui concerne leur taille et leur emplacement, pour le vol vertical.

30. Méthode pour réaliser la position DAAFC *(NUTOL)* de l'aéronef conformément à n'importe laquelle de revendications de 15 à 29 y compris, comprenant les étapes suivantes:
installer l'aéronef (1) en une position horizontale stable reposant à la fois sur l'atterrisseur avant (12) et sur ll'atterrisseur principal (11),
appliquer une poussée inverse à la source génératrice de poussée (3) alors que le train principal est bloqué en position, faisant ainsi basculer l'aéronef (1) en une position stable d'assiette positive, reposant à la fois sur le train principal (11) et sur le support de queue (13).

31. Méthode de décollage vertical d'un aéronef conforme à n'importe laquelle des revendications de 15 à 29, et comprenant les étapes suivantes:
installer l'aéronef (1) en position DAAFC *(NUTOL)* au sol (24)
soulever ledit aéronef verticalement dans la position DAAFC *(NUTOL)* en utilisant le fait d'accroître la force de l'hélice (3), augmentant de ce fait le flux d'air engendré par souffle de l'hélice (4) ainsi que la portance induite sur l'aile maîtresse.

32. Méthode d'atterrissage vertical d'un aéronef conforme à n'importe laquelle des revendications de 15 à 29, et comprenant les étapes suivantes:
augmenter l'angle d'attaque de l'aéronef afin re réaliser le vol vertical,
pendant le vol vertical, réduire la poussée de ladite source génératrice de poussée (3) réduisant de ce fait la portance induite sur les ailes, aboutissant à une descente verticale.
effectuer un touché vertical dans la position DAAFC *(NUTOL).*

33. Méthode de transition du vol vertical au vol horizontal de l'aéronef conforme à n'importe laquelle des revendications précédentes, la méthode comprenant les étapes de: rentrée graduelle de tous les dispositifs générateurs de forte traînée afin de réduire la traînée à un minimum permettant ainsi le vol optimal horizontal et vers l'avant; rentrée de tout les dispositifs hypersustentateurs et de ceux générant une forte traînée de façon à obtenir le profil d'aile originel et rentrée du volet déflecteur du fuselage à sa position lisse de niveau avec la surface du fuselage.
